# EUROPÄISCHE PATENTANMELDUNG

(11) **EP 0 703 681 A2**
(43) Veröffentlichungstag der Anmeldung: **27.03.1996**
(21) Anmeldenummer: 95113565.6
(22) Anmeldetag: 29.08.1995
(51) Int. Cl.: H04B 10/207

(54) **Optisches Teilnehmer-Anschlussnetz zur kombinierten Übertragung teilnehmerbezogener Signale und von Video- und/oder Audio-Verteilsignalen**

(30) Priorität: 22.09.1994 DE 4433895
(71) Anmelder: SIEMENS AKTIENGESELLSCHAFT, D-80333 München (DE)
(72) Erfinder: Möhrmann, Karl-Heinz, Dipl.-Ing., D-81369 München (DE)

(57) **Zusammenfassung**

Zusätzlich zur Verteilung von Video- und/oder Audiosignalen wird für optische Teilnehmer-Anschlußnetze die bidirektionale Übertragung teilnehmerbezogener Signale gewünscht. Wegen der zu stark ansteigenden Datenraten bei der Verwendung der für die Verteilsignale vorgesehenen passiven Lichtwellenleiterstruktur wird vorgeschlagen, für die Übertragung der teilnehmerbezogenen Signale in den den Netzabschlußeinrichtungen nächstbenachbarten Kabelverzweigern aktive Knoten vorzusehen, die jeweils Multiplexer für die von den Netzabschlußeinrichtungen stammenden Signale und Demultiplexer für die von der zentralen Kopfstelle stammenden Signale enthalten und die teilnehmerbezogenen Informationen im Punkt-zu-Punkt-Betrieb zu übertragen.

## Beschreibung

Die Erfindung betrifft ein optisches Netz entsprechend dem Oberbegriff des Anspruchs 1.

Die Struktur optischer Teilnehmeranschlußnetze ist aus "Der Fernmeldeingenieur" Heft 4 vom April 1992, Abschnitt 5, Seiten 9 bis 12 bekannt. Dort ist im Bild 5.1 die Grundstruktur eines derartigen Netzes dargestellt, bei dem von einer zentralen Kopfstelle über eine baumähnliche, Kabelverzweiger enthaltende Lichtwellenleiterstruktur zu teilnehmernahen Netzabschlußeinrichtungen Video- und/oder Audio-Verteilsignale übertragen werden. Im Hinblick auf die Verteilung einer Vielzahl von Video- und/oder Audiosignalen an eine Vielzahl von Teilnehmern ist eine Netzstruktur sinnvoll, die als rein passives Netz aufgebaut ist. Der weitere Ausbau derartiger Netze im Hinblick auf die Übertragung teilnehmerbezogener Informationen von und zur Zentrale, beispielsweise für Bildfernsprechen oder "Video-Auf-Abruf" benötigt aber neben zusätzlichen Übertragungswegen von der Zentrale zu den Teilnehmern Rückkanäle zur Übertragung teilnehmerbezogener Informationen zur Zentrale. Eine Möglichkeit zur Realisierung von Zusatzkanälen und Rückkanälen besteht darin, die teilnehmerbezogenen Informationen von der Zentrale zu den Teilnehmern zusammen mit den Video- und/oder Audiosignalen zu übertragen und die von den Teilnehmern stammenden Signale in Gegenrichtung in der gleichen Lichtwellenleiterstruktur mit einer anderen Wellenlänge oder in einer parallelen Lichtwellenleiterstruktur zur Zentrale zu senden. Die Übertragung der teilnehmerbezogenen Informationen muß dann im Zeitmultiplex-Vielfachzugriff erfolgen, bei dem die teilnehmernahen Netzabschlußeinrichtungen in einem sich aus der Anzahl der Teilnehmer ergebenden Zyklus jeweils in einem bestimmten Zeitfenster ihre Signale in das passive optische Netz einspeisen. Voraussetzung ist dabei, daß - im Hinblick auf die unterschiedliche Entfernung der Teilnehmer von der Zentrale - eine Synchronisation der einzelnen teilnehmernahen Netzabschlußeinrichtungen so erfolgt, daß in der Zentrale ein serieller Datenfluß ohne größere Lücken und ohne Überlappungen empfangen werden kann. Bei einer größeren Zahl von Teilnehmern summieren sich dabei aber die Datenraten der Einzelsignale zu einer relativ hohe Datenrate, die wegen der für jeden Burst neu erforderlichen Empfängersynchronisation schwierig zu beherrschen ist. Durch die Aussendung der teilnehmerbezogenen Informationen an alle Teilnehmer ergibt sich außerdem die Notwendigkeit eines Schutzes gegen unzulässiges Mithören fremder Informationen, der bei einem optischen Netz der eingangs erwähnten Art nur mit entsprechendem Aufwand gelöst werden kann.

Die Aufgabe bei der vorliegenden Erfindung besteht also darin, das optische Netz der eingangs erwähnten Art so weiterzuentwickeln, daß einerseits die einfache Verteilung von Video- und/oder Audio-Signalen weiterhin möglich ist, andererseits aber insbesondere der Rückkanal von den teilnehmernahen Netzabschlußeinrichtungen zur Zentrale keine hohen Datenraten aufweist und ein wirksamer Datenschutz möglich ist.

Die Aufgabe wird erfindungsgemäß durch ein optisches Netz der eingangs genannten Art gelöst, das durch die im Kennzeichen des Patentanspruchs 1 angegebenen Merkmale weitergebildet ist.

Das erfindungsgemäße Netz bietet neben dem Vorteil der einfachen technischen Realisierung auch die Möglichkeit, daß entsprechend den Patentansprüchen 2 und 3 dieses Netz leicht modifiziert und damit in seiner Übertragungskapazitat erweitert werden kann. Der Patentanspruch 4 beschreibt eine Möglichkeit zur Realisierung des erfindungsgemäßen optischen Netzes, die den Einsatz optischer Faserverstärker und damit ein entsprechend hohes Teilerverhältnis für die optische Strahlaufteilung ermöglicht.

Die Erfindung soll im folgenden anhand von in der Zeichnung dargestellten Ausführungsbeispielen näher erläutert werden. Dabei zeigt:
- Figur 1: ein erstes Ausführungsbeispiel des erfindungsgemäßen optischen Netzes mit getrennten Leitungen für die Verteilsignale und die teilnehmerbezogenen Signale,
- Figur 2: ein weiteres Ausführungsbeispiel des erfindungsgemäßen optischen Netzes mit optischem Wellenlängenmultiplex,
- Figur 3: ein drittes Ausführungsbeispiel des erfindungsgemäßen optischen Netzes mit einer doppelten Leitung zu einer Netzabschlußeinrichtung, die viele Teilnehmer versorgt und
- Figur 4: ein viertes Ausführungsbeispiel des erfindungsgemäßen optischen Netzes mit optischen Ringleitungen für die Verteildienste und die interaktiven Dienste.

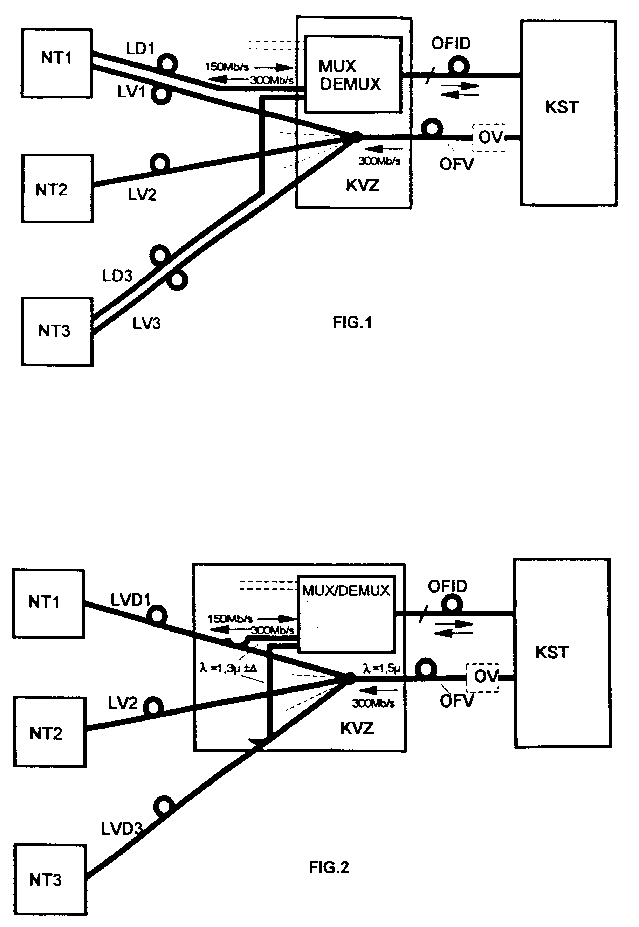

In den Figuren 1 bis 4 sind Beispiele für die Übertragung von Video- und/oder Audio-Verteilsignalen von einer Kopfstelle KST zu teilnehmernahen Netzabschlußeinrichtungen NT1, NT2, NT3 über eine baumähnliche, Kabelverzweiger enthaltende, passive Lichtwellenleiterstruktur und außerdem die Übertragung teilnehmerbezogener Informationen von einer Kopfstelle über einen aktiven Knoten des Kabelverzweigers und zusätzliche Übertragungswege zu den Netzabschlußeinrichtungen NT1, NT2, NT3 dargestellt. Die Übertragung erfolgt dabei grundsätzlich als digitale Basisbandübertragung im Zeitmultiplex vorzugsweise mittels des im folgenden mit ATM abgekürzten Asynchronen Übertragungsmodus. Im Hinblick auf die großen Bandbreiten der Lichtwellenleiter sind bandbreitensparende Modulationsverfahren insbesondere für die Video- und der Audiosignale nicht mehr nötig, so daß sich die Verteilung dieser Signale an die Teilnehmer vereinfacht. Die Kopfstelle KST ist dabei einerseits an eine Quelle für die Video und/oder Audio-Verteilsignale, beispielsweise eine Satelliten-Empfangsstation und andererseits an eine Breitband-Vermittlungseinrichtung für die teilnehmerbezogenen Informationen angeschlossen. Die teilnehmerbezogenen Informationen umfassen neben den klassischen Telefondiensten auch "Video- auf- Abruf" sowie beispielsweise Schmal- und Breitband-ISDN-Kanäle. Die Verteilung der Audio- und Video-Verteilsignale erfolgt über die passive Lichtwellenleiterstruktur zu den Netzabschlußeinrichtungen, da alle angeschlossenen Teilnehmer Zugriff auf dieselben Informationen haben sollen. Im Hinblick auf die durch die passiven optischen Verzweiger bewirkte hohe Dämpfung besteht die Möglichkeit, sowohl in der Kopfstelle als auch im Kabelverzweiger optische Faserverstärker vorzusehen.

Die Übertragung der teilnehmerbezogenen Informationen erfolgt für alle Ausführungsbeispiele zwischen der Kopfstelle und den Netzabschlußeinrichtungen in beiden Richtungen Punkt-zu-Punkt-bezogen über einen aktiven Knoten KN des jeweiligen Kabelverzweigers KVZ. Damit ergibt sich nur noch die Notwendigkeit, diejenigen Daten von und zu den Netzabschlußeinrichtungen zu übertragen, die tatsächlich für die angeschlossenen Teilnehmer bestimmt sind oder von dort kommen. Dies ermöglicht sowohl die einfachstmöglichen optischen Sender auf beiden Seiten als auch einfache optische Empfänger im aktiven Knoten, verhindert ein Mithören fremder Informationen und bietet wegen der vergleichsweise niedrigen Datenraten die Möglichkeit des späteren Ausbaus der Datenübertragung zu höheren Bitraten.

Bei allen Ausführungsbeispielen ergibt sich beispielhaft für die Verteilung der Video- und/oder Verteilsignale bei 50 Programmen und einer Datenrate 6 Mbit/s eine Datenrate von 300 Mbit/s. Fur die Übertragung der teilnehmerbezogenen Informationen sind für die zusätzliche Übertragung vom Teilnehmer gewünschter Fernsehprogramme und für die weiteren teilnehmerbezogenen Informationen insgesamt 300 Mbit/s von der Kopfstelle zur jeweiligen Netzabschlußeinrichtung und in Gegenrichtung etwa 150 Mbit/s vorgesehen. Damit wird eine noch gut beherrschbare Bitrate von 300 Mbit/s im Verteilnetz zwischen Kabelverzweigern KVZ und den Netzabschlußeinrichtungen NT in keiner Richtung und auf keinem Übertragungsweg überschritten.

Das optische Netz nach der Figur 1 enthält die Kopfstelle KST, an die in vereinfachter Darstellung über nur einen einzigen Kabelverzweiger KVZ die drei Netzabschlußeinrichtungen NT1, NT2, NT3 zur Verteilung der Video- und/oder Audio-Signale angeschlossen sind. Die Verbindung von der Kopfstelle KST zum passiven Teil des Kabelverzweigers KVZ erfolgt dabei über eine optische Speiseleitung OFV, die einen optischen Verstärker OV enthalten kann. Vom passiven Teil des Kabelverzweigers KVZ werden die Verteilsignale über den Lichtwellenleiter LV1 zur ersten Netzabschlußeinrichtung NT1, über den Lichtwellenleiter LV2 zur zweiten Netzabschlußeinrichtung NT2 und über den dritten Lichtwellenleiter LV3 zur dritten Netzabschlußeinrichtung NT3 übertragen. Für die Übertragung der teilnehmerbezogenen Signale, also der Signale der interaktiven Dienste von der Kopfstelle KST zum aktiven Knoten KN ist ein weiterer Lichtwellenleiter OFID vorgesehen, über den bidirektional im Wellenlängenmultiplex übertragen wird. Von dem Multiplexer und Demultiplexer enthaltenden aktiven Knoten KN werden über einen gesonderten Lichtwellenleiter LD1 ebenfalls bidirektional im Wellenlängenmultiplex die teilnehmerbezogenen Signale von und zur ersten Netzabschlußeinrichtung NT1 übertragen. Nachdem die zweite Netzabschlußeinrichtung NT2 nur für die Verteilung der Video- und/oder Audiosignale vorgesehen ist, entfällt dort die Verbindung zum aktiven Knoten KN, diese Verbindung besteht aber vom aktiven Knoten über einen weiteren Lichtwellenleiter LD3 zur dritten Netzabschlußeinrichtung NT3. Der aktive Knoten enthält einen Multiplexer für die von den Netzabschlußeinrichtungen NT1, NT2, NT3 stammenden teilnehmerbezogenen Signale und einen Demultiplexer für die von der Kopfstelle stammenden teilnehmerbezogenen Signale.

In der Figur 2 ist eine gegenüber der Figur 1 alternative Lösung für ein optisches Netz dargestellt. Die Verbindungen zwischen der Kopfstelle KST und dem Kabelverzweiger KVZ entsprechen in der Figur 2 denen der Figur 1, vom Kabelverzweiger KVZ zu den Netzabschlußeinrichtungen NT1, NT2, NT3 sind jedoch nur drei Lichtwellenleiter vorgesehen, über die im Wellenlängenmultiplex sowohl die Verteilsignale als auch die teilnehmerbezogenen Signale übertragen werden. Dazu ist mit dem aktiven Knoten ein erster Lichtwellenleiter LVD1 verbunden, über den beispielsweise mit einer Wellenlänge von 1,5 µm die Verteilsignale und mit Wellenlängen um 1,3 µm die teilnehmerbezogenen Signale für die Hin- und die Rückrichtung übertragen werden. Für die zweite Netzabschlußeinrichtung NT2 hat sich gegenüber dem optischen Netz nach der Figur 1 nichts geändert, die Verbindung vom Kabelverzweiger KVZ zur dritten Netzabschlußeinrichtung NT3 erfolgt über einen Lichtwellenleiter LVD3, über den die Verteilsignale ebenfalls etwa bei 1,5 µm und die teilnehmerbezogenen Signale bei etwa 1,3 µm übertragen werden. Der Vorteil der Lösung nach der Figur 2 liegt in dem geringeren Aufwand an Lichtwellenleitern, demgegenüber ergibt sich ein höherer Aufwand im Kabelverzweiger KVZ einerseits im Hinblick auf die Anwendung von Wellenlängenmultiplex und andererseits durch die Verwendung beispielsweise von Schmelzfaserkopplern zur Kombination der Ausgangssignale des aktiven und des passiven Knotens des Kabelverzweigers KVZ auf die Lichtwellenleiter LVD1, LVD3.

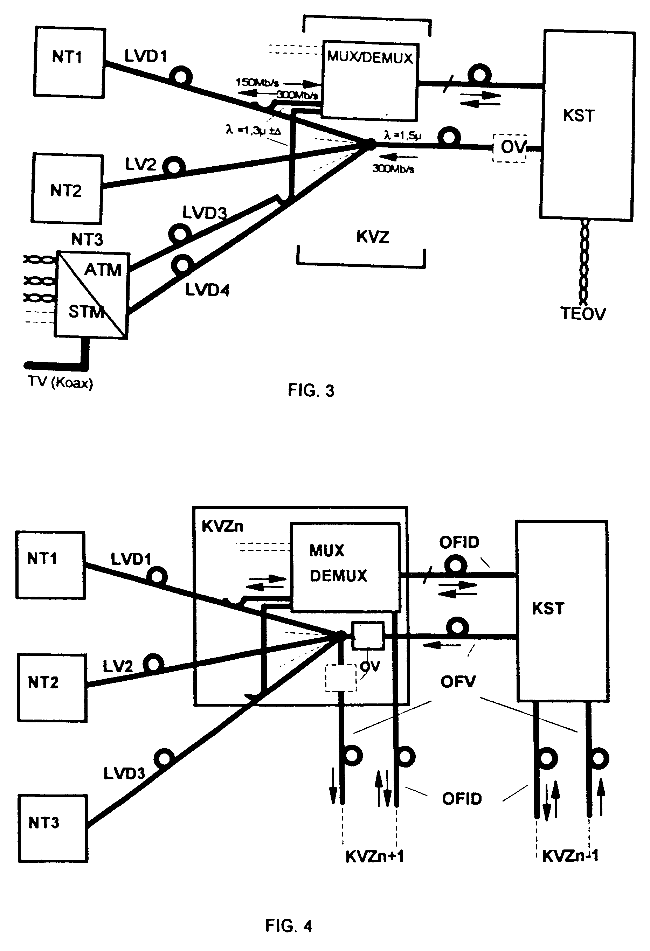

In der Figur 3 entsprechen die Verbindungen zwischen der Kopfstelle KST und dem Kabelverzweiger KVZ denen der Figuren 1 und 2. Auch die Verbindungen zwischen dem aktiven Knoten und der ersten und zweiten Netzabschlußeinrichtung NT1, NT2 entsprechen denen der Figur 1 und 2. Die dritte Netzabschlußeinrichtung NT3 ist aber beim optischen Netz nach der Figur 3 für die Versorgung vieler Teilnehmer vorgesehen, die die vom Asynchronen Transfermode ATM in den synchronen Transfermode STM gewandelten Signale erhalten, wobei die Video- und Audio-Verteilsignale über ein Koaxkabel und die Telefonsignale über verdrillte Doppeladern weitergeleitet werden. Auch eine Weiterübertragung von ATM-Signalen von und zu einem Endgerät mit ATM-Schnittstelle ist möglich. Die Übertragung vom Kabelverzweiger KVZ zur dritten Netzabschlußeinrichtung NT3 erfolgt dabei über zwei parallele Lichtwellenleiter LVD3, LVD4, die beide die gleichen Signale, also das Verteilsignal des passiven Kabelverzweigers und die teilnehmerbezogenen Signale des aktiven Knotens führen. Die Verdoppelung der Zahl der Lichtwellenleiter dient dabei nicht der Verringerung der Übertragungsbitrate sondern zur Erhöhung der Redundanz und für Ersatzschaltungen bei Ausfall des ersten Lichtwellenleiters bzw. der mit diesem verbundenen aktiven und passiven Übertragungseinrichtungen.

Ein Ausschnitt aus einem größeren optischen Netz der erfindungsgemäßen Art zeigt die Figur 4, bei der die Verbindungen vom Kabelverzweiger zur ersten bis dritten Netzabschlußeinrichtung NT1, NT2, NT3 über die Lichtwellenleiter LVD1, LV2, LV3 denen der Figur 2 entsprechen. Im Hinblick auf die Größe des optischen Netzes sind in diesem Falle die Verbindungen zwischen der Kopfstelle KST und den zugeordneten Kabelverzweigern als Ringstruktur ausgeführt. Ein erster optischer Ring OFID verbindet dabei die aktiven Knoten mehrerer Kabelverzweiger KVZn-1, KVZn, KVZn+1, während ein zweiter optischer Ring OFV für die Audio und/oder Video Verteilsignale vorgesehen ist und die passiven Strahlteiler der einzelnen Kabelverzweiger miteinander verbindet. Im Hinblick auf die Einfügung in die Ringstruktur sind in diesem Falle die Multiplexer- Demultiplexereinrichtungen MUX, DMUX als Add-Drop-Multiplexer/Demultiplexer ausgeführt, die das Einkoppeln und das Auskoppeln digitaler Signale aus der Rahmenstruktur eines Multiplexsignals gestatten, ohne daß das Multiplexsignal jeweils völlig zerlegt und neu aufgebaut werden muß. In die Ringstrukturen können, wie angedeutet, zusätzlich optische Verstärker AV insbesondere in den jeweiligen Kabelverzweigern KVZn-1, KVZn, KVZn+1 eingefügt werden.

Der Einzugsbereich der beschriebenen optischen Netze nach den Figuren 1 bis 4 ist besonders groß, da für die teilnehmerbezogenen Signale mit Ausnahme der Ein- bzw. Auskopplungen im Kabelverzweiger keine optische Strahlteilung vorgenommen werden muß und die Verteilsignale in einfacher Weise mittels optischer Faserverstärker auf die notwendigen Pegel verstärkt werden können. Erweiterungen der Kabelverzweiger sind in einfacher Weise dadurch möglich, daß im aktiven Knoten eines Kabelverzweigers die Zahl der Multiplex- und Demultiplexeinrichtungen erhöht werden kann. Bei einer großen Anzahl derartiger Einrichtungen ergibt sich aber in der Regel die Notwendigkeit, auf eine Fernspeisung des Kabelverzweigers von der Kopfstelle über parallele metallische Adern zu verzichten und eine lokale Speisestromversorgung vorzusehen.

Im Hinblick auf die Übertragung der teilnehmerbezogenen Informationen zwischen den Kabelverzweigern und den Netzabschlußeinrichtungen kann jede Netzabschlußeinrichtung bis zu etwa 30 sogenannte Set-Top-Boxen bedienen, wie sie beispielsweise in "Funkschau" 18/1994 Seiten 72 und 73 beschrieben sind. Zusätzlich kann eine Netzabschlußeinrichtung bis zu ca. 12 Teilnehmer mit einer erhöhten Datenrate von etwa 10 Mbit/s oder eine größere Zahl mit kleinerer durchschnittlicher Bitrate beispielsweise für Breitbandanwendungen versorgen.

## Patentansprüche

1. Optisches Netz zur Übertragung von Video- und/oder Audio-Verteilsignalen von einer zentralen Kopfstelle über eine baumähnliche, passive Kabelverzweiger enthaltende Lichtwellenleiterstruktur zu teilnehmernahen Netzabschlußeinrichtungen,
**dadurch gekennzeichnet,**
daß die zusätzliche Übertragung teilnehmerbezogener Informationen in beiden Richtungen zwischen den teilnehmernahen Netzabschlußeinrichtungen (NT) und einem jeweils nächstbenachbarten Kabelverzweiger (KVZ) Punkt-zu-Punkt-bezogen über wenigstens je einen zusätzlichen optischen Übertragungsweg für beide Übertragungsrichtungen erfolgt, daß die Kabelverzweiger (KVZ) zusätzlich aktive Knoten mit Multiplexereinrichtungen(MUX) für die von den teilnehmernahen Netzabschlußeinrichtungen stammenden Signale und Demultiplexereinrichtungen(DEMUX) für die von der zentralen Kopfstelle(KST) stammenden Signale enthalten, daß die Kabelverzweiger(KVZ) über wenigstens einen optischen Übertragungsweg für jede Übertragungsrichtung mit der Kopfstelle(KST) verbunden sind und daß alle Signalübertragung zwischen den Kabelverzweigern(KVZ) und der Kopfstelle(KST) in digitaler Form im Zeitmultiplex mittels des auch als ATM bezeichneten Asynchronen Übertragungsmodus erfolgt.

2. Optisches Netz nach Patentanspruch 1,
**dadurch gekennzeichnet,**
daß als Übertragungsweg zwischen der Netzabschlußeinrichtung(NT) und dem zugeordneten Kabelverzweiger(KVZ) für jede Übertragungsrichtung wenigstens ein Lichtwellenleiter(LWL) vorgesehen ist.

3. Optisches Netz nach Anspruch 1,
**dadurch gekennzeichnet,**
daß die Übertragung zwischen der Netzabschlußeinrichtung(NT) und dem zugeordneten Kabelverzweiger(KVZ) in beiden Übertragungsrichtungen über einen einzigen Lichtwellenleiter(LWL) im Wellenlängenmultiplex erfolgt.

4. Optisches Netz nach einem der Ansprüche 1 bis 3,
**dadurch gekennzeichnet,**
daß die Übertragung der teilnehmerbezogenen Informationen bei einer Wellenlänge von 1,3 µm und die Übertragung der an alle Teilnehmer gesendeten Informationen bei einer Wellenlänge von 1,5 µm erfolgt.

5. Optisches Netz nach Patentanspruch 1,
**dadurch gekennzeichnet,**
daß der Übertragungsweg zwischen der zentralen Kopfstelle(KST) und den Kabelverzweigern(KZW) als Ringstruktur ausgeführt ist.

6. Optisches Netz nach Ansprüchen 1 bis 5,
**dadurch gekennzeichnet,**
daß die aktiven Einrichtungen des Kabelverzweigers(KZW) und wahlweise auch die der Netzabschlußeinrichtungen(NT) jeweils an eine lokale Speisestromversorgung angeschlossen sind.
